# EUROPÄISCHE PATENTSCHRIFT

(11) **EP 0 534 902 B1**
(45) Veröffentlichungstag und Bekanntmachung des Hinweises auf die Patenterteilung: **22.07.1998**
(21) Anmeldenummer: 92810709.3
(22) Anmeldetag: 14.09.1992
(51) Int. Cl.: B65G 47/51, B65G 47/57, B65G 47/29

(54) **Verfahren zum Zuführen von Produkten in einen Speicher und nach diesem Verfahren arbeitende Speicherzufuhr-Einrichtung**
Method for feeding products into a buffer and buffer feeding device operating according to this method
Procédé d'alimentation de produits dans un système de stockage-tampon et dispositif d'alimentation pour système de stockage-tampon fonctionnant selon ce procédé

(30) Priorität: 24.09.1991 CH 2836/91
(43) Veröffentlichungstag der Anmeldung: 31.03.1993
(73) Patentinhaber: SIG Schweizerische Industrie-Gesellschaft, 8212 Neuhausen am Rheinfall (CH)
(72) Erfinder: Gasser, Markus, CH-8214 Gächlingen (CH); Schneider, Hauke, W-7891 Lottstetten (DE)
(74) Vertreter: Schick, Carl

(56) Entgegenhaltungen:
- US-A- 1 901 928
- US-A- 1 911 984
- US-A- 3 587 895
- US-A- 4 953 688

## Beschreibung

Die vorliegende Erfindung betrifft ein Verfahren zum Zuführen von Produkten in einen Speicher nach dem Oberbegriff des Patentanspruchs 1 und eine nach diesem Verfahren arbeitende Speicherzufuhr-Einrichtung nach dem Oberbegriff des Anspruchs 6.

Bei der Verpackung von flachen Produkten wie Biskuits oder Tafeln oder Riegeln aus Schokolade werden oft sogenannte FIFO-Speicherschränke (first-in, first-out) eingesetzt, in denen die Ware vorübergehend über eine einfache Speicherzufuhr-Einrichtung nach Bedarf aufbewahrt werden kann. Solche bekannten Speicherzufuhr-Einrichtungen erweisen sich jedoch als nachteilig im Hinblick darauf, dass sie eine Beschränkung der Ladegeschwindigkeit bedingen.

Aus der US-A 4,953,688 ist es an sich bekannt, Reihen von Produkten bei der Uebergabe von einem ersten zu einem zweiten Förderband auszurichten. Dabei wird das stromabwärtige Ende des ersten Förderbandes periodisch abgesenkt, so dass die betreffende Produktereihe an einem Anschlaglineal anstösst.

Aus der US-A-1 911 984 ist ein eingangs genanntes Verfahren zum Zuführen von Produkten in einen Speicher bekannt. Die in dieser Druckschrift beschriebene bekannte und eingangs genannte Vorrichtung weist ein Zuführmittel auf, welches die Produkte nicht nur in Richtung auf den Eingang des Speichers sondern gleichzeitig auch in Bewegungsrichtung der Lagerebenen bewegt, um sie auf die jeweilige Lagerebene umzuladen.

Aus der US-A-1 901 928 ist es bekannt, regelmässig beabstandete Schalen von einem Horizontalförderer auf einen Vertikalförderer überzuführen. Bei einer Ausführungsform ist zwischen den Horizontalförderer und den Vertikalförderer ein um seine stromaufwärtige Umlenkrolle schwenkbares Förderband angeordnet. Das Band hat in regelmässigen Abständen Mitnehmer. Das stromabwärtige Ende des Bandes ist über ein Kurvenscheibengetriebe mit der Bewegung des Vertikalförderers gekoppelt, so dass es sich periodisch auf und ab bewegt. Das Förderband ist ebenfalls über ein Getriebe mit dem Antrieb des Vertikalförderers gekoppelt. Diese Vorrichtung setzt voraus, dass die Schalen dem Förderband in regelmässigen Abständen zugeführt werden. Die starre mechanische Kopplung zwischen Vertikalbewegung des stromabwärtigen Förderbandendes und der Bewegung des Vertikalförderers bedingt einen konstanten Abstand zwischen den Tablaren des Vertikalförderers. Diese Bedingung ist bei vielen Durchlaufspeichern nicht erfüllt.

Es ist Aufgabe der Erfindung, ein Verfahren zum Zuführen von Produkten in einen Speicher und eine nach diesem Verfahren arbeitende Speicherzufuhr-Einrichtung zu schaffen, die eine erhöhte Ladegeschwindigkeit der Produkte ermöglichen.

Diese Aufgabe wird erfindungsgemäss durch ein Verfahren oder eine Speicherzufuhr-Einrichtung mit den im kennzeichnenden Teil des Anspruchs 1 bzw. 6 angegebenen Merkmalen gelöst.

Weitere vorteilhafte Ausführungen der Erfindung sind in den abhängigen Ansprüchen angegeben.

Im folgenden wird die Erfindung beispielsweise anhand der Zeichnung näher erläutert. Es zeigen:
- Fig. 1: eine schematische Ansicht eines FIFO-Speicherschranks und eine Seitenansicht der erfindungsgemässen Speicherzufuhr-Einrichtung,
- Fig. 2: eine solche Speicherzufuhr-Einrichtung im Detail,
- Fig. 3: eine schematische Darstellung des Weichenbandes einer solchen Speicherzufuhr-Einrichtung,
- Fig. 4: eine Draufsicht einer solchen Speicherzufuhr-Einrichtung,
- Fig. 5 und 6: je ein Zeitdiagramm zur Erläuterung einer kontinuierlichen bzw. einer diskontinuierlichen Zuführung nach dem erfindungsgemäsen Verfahren, und
- Fig. 7: ein Zeitdiagramm zur Erläuterung einer kontinuierlichen Zuführung nach dem Stand der Technik mit Gondeln bzw. Etagen, die sich abwechslungsweise im Stillstand oder in Bewegung befinden.

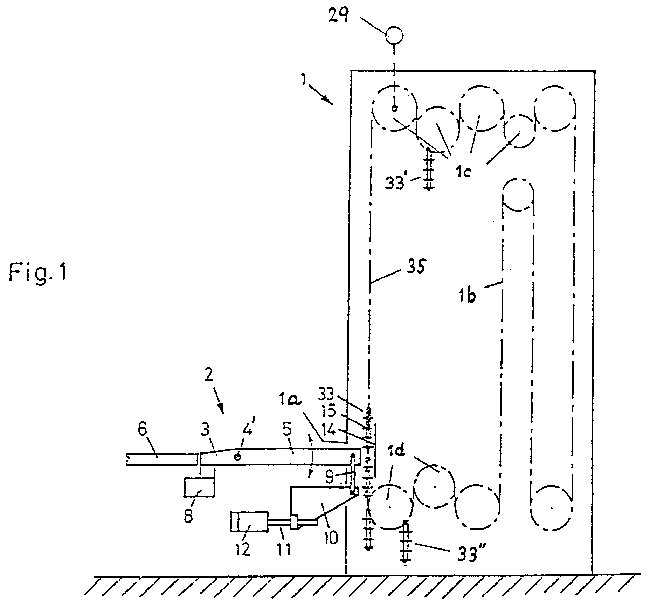

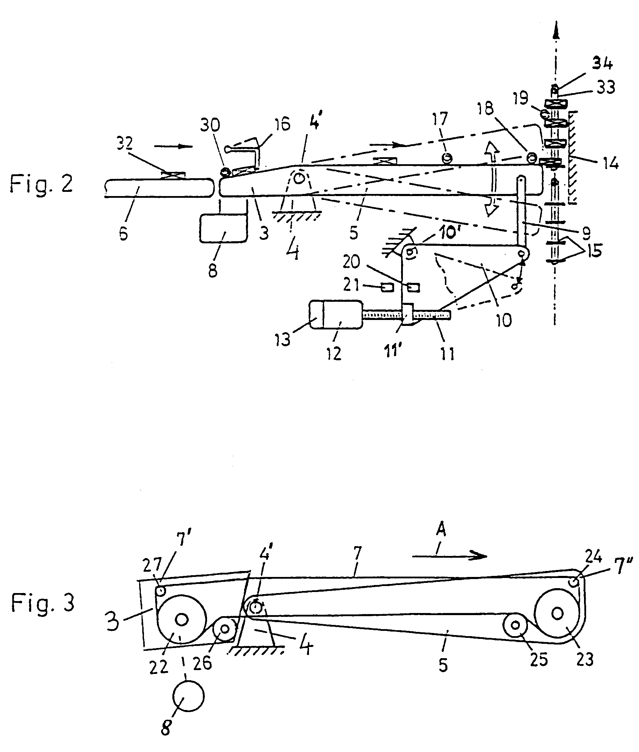

Die Einrichtung nach Fig. 1 weist einen an sich bekannten FIFO-Speicherschrank 1 mit einer seitlich angeordneten, in einem in den Figuren nicht dargestellten Gestell montierten Speicherzufuhr-Einrichtung 2 auf. Ein solcher FIFO-Speicherschrank, der auch ein Durchlaufspeicher sein kann, weist mindestens eine Speicherschlaufe 35, 1b auf. Die Einrichtung 2 umfasst einen Bandchassis mit einem Aufnahmeteil 3, der über eine Achse 4′ eines Trägers 4 (Fig. 2) mit einem schwenkbaren Teil 5 verbunden, der zwischen dem Ende einer Fördervorrichtung 6 und dem Eingang 1a des FIFO-Speicherschranks 1 angeordnet ist, um die über die Fördervorrichtung 6 und über das Weichenband 7 (Fig. 3) der Einrichtung 2 in Richtung A transportierten Produkte 32 nach Bedarf vorübergehend im Schrank 1 zu lagern. Zu diesem Zweck ist die Einrichtung 2 mit einem Antriebsmotor 8 für das Weichenband 7 versehen, dessen Enden mit 7′ bzw. 7˝ bezeichnet sind.

Das freie Ende des schwenkbaren Teils 5 (Fig. 2) ist über einen Pleuel 9 mit einem um eine Achse 10′ schwenkbaren Hebel oder Umlenkhebel 10 mit Kulisse verbunden, der über eine Spindel oder einen Spindeltrieb 11 mit Kulissenstein 11′ von einem Spindelantriebsmotor 12 geschwenkt wird, wobei beispielsweise die Elemente 5, 7, 9, 10 und 12 im wesentlichen das Zufuhrmittel als Teil der Erfindung bilden. Der Spindelantriebsmotor 12 für die Bandhubbewegung wird durch eine Steuerung 31 gesteuert. Im FIFO-Speicherschrank 1 sind ein Stückanschlag 14, der mit der Speicherzufuhr-Einrichtung 2 zusammenwirkt, und Etagenblechtablare 15 oder Gestellbretter vorhanden, die als Lagerebenen für die Produkte dienen. Die Speicherzufuhr-Einrichtung 2 trägt im Grenzbereich zur Fördervorrichtung 6 ein Ausrichtlineal oder einen Reihenausrichter 16. Zur Steuerung der Speicherzufuhr-Einrichtung 2 sind in einem Abstand von ihrem freien Ende eine Lichtschranke 17, in ihrem Endbereich eine Lichtschranke 18 und am Eingang des FIFO-Speicherschranks 1 eine Lichtschranke 19 angeordnet. Die Bewegung des Hebels 10 wird durch einen Endtaster 20 und einen Endtaster 21 beschränkt.

Die Speicherzufuhr-Einrichtung 2 dient zur Halterung des endlosen Weichenbandes 7, das wie in Fig. 3 dargestellt, durch zwei grosse Rollen 22, 23 und vier kleine Rollen 24, 25, 26, 27 geführt wird, so dass eine gemeinsame Schwenkbewegung der drei Rollen 23, 24, 25 um die horizontale Schwenkachse 4′ möglich ist.

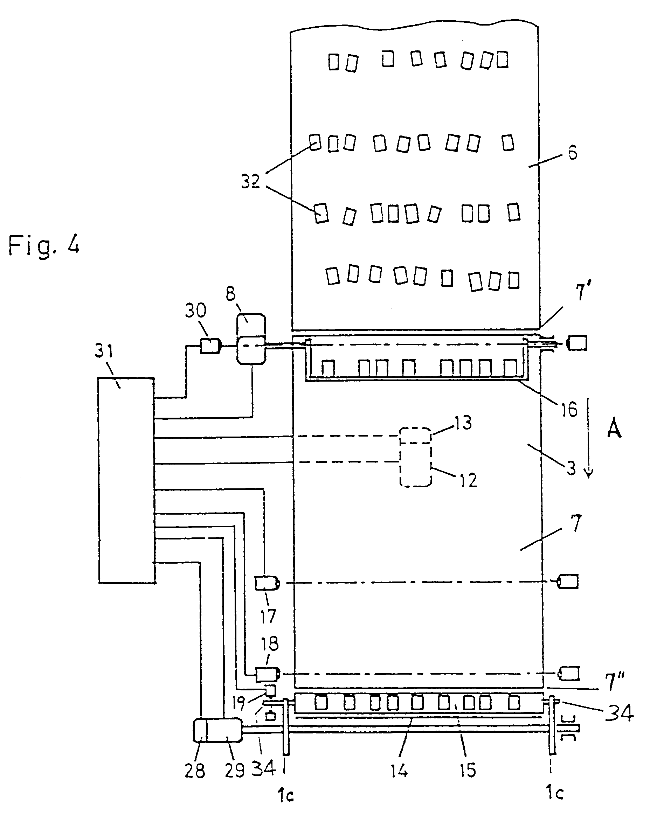

Aus Fig. 4 ist ersichtlich, dass der Motor 8, der Spindelantriebsmotor 12, der Intirementalgeber 13, die Lichtschranken 17, 18 und 19 und eine weitere Lichtschranke 30, die sich im Grenzbereich nahe der Fördervorrichtung 6 befindet, sowie ein weiterer Inkrementalgeber 28 und ein Antrieb 29 für die Etagenbewegung über elektrische Leitungen mit einer elektrischen Steuereinheit 31 verbunden sind, die zur Steuerung aller dieser Elemente dient. Als Inkrementalgeber können auch Positionsgeber und als Lichtschranken auch andere Sensormittel eingesetzt werden. Die Produkte 32 liegen, wie in Fig. 4 dargestellt, auf dem Förderband der Fördervorrichtung 6. Die Lichtschranke 17 wird nur bei speziellen Produkten installiert bzw. eingesetzt, um die Beschleunigungen der Weichenkante so gering wie möglich zu halten.

Die Einrichtung nach den Figuren 1 bis 4 funktioniert folgendermassen:

Die Speicherzufuhr-Einrichtung 2 dient als Zufuhrelement, derart, dass der schwenkbare Teil 5 eine Weiche bildet, deren auslaufseitige Bandkante 7˝ den sich bewegenden Platten oder Lagerebenen 15 des FIFO-Speicherschranks 1 nachgeführt wird. Diese Platten sind vorzugsweise zwischen zwei umlaufenden ketten, in sogenannten Gondeln 33 (Fig. 2) zusammengefasst, eingehängt.

Die ankommenden Produkte oder Produktreihen 32 werden somit auf dem Aufnahmeteil 3 der Speicherzufuhr-Einrichtung 2 beispielsweise mit konstanter Geschwindigkeit von der Fördervorrichtung 6 übernommen und mit dem Ausrichtlineal 16 ausgerichtet. Die Lichtschranke 30 erkennt ankommende Produkte, schliesst das Ausrichtlineal 16 und öffnet es wieder, wenn sie hinter der Reihe kein Produkt mehr erkennt.

Der Antriebsmotor 8 für das Band 7 wird auf eine vorbestimmte Drehzahl und damit auch eine vorbestimmte Bandgeschwindigkeit eingestellt. Die ausgerichteten Reihen passieren auf dem schwenkbaren Teil 5 der Speicherzufuhr-Einrichtung 2 die Lichtschranke 17, welche den zeitlichen Abstand zur nächsten Reihe misst. Der gemessene Betrag wird in einem Schieberegister der elektrischen Steuereinheit 31 abgelegt und später zur Steuerung der Drehzahl des Antriebs 29 verwendet. Auslaufseitig ist der schwenkbare Teil 5 über den Pleuel 9 und das Hebemittel 10, 11, 12 so eingestellt, dass er knapp über einem nicht belegten Etagenblechtablar 15 eines Speicherelementes steht. Die Etagen oder Lagerebenen sind in bekannter Teilung in den Gondeln 33 oder direkt zwischen Ketten eingehängt und werden durch den Antrieb 29 vertikal nach oben, in Ausnahmefällen auch nach unten bewegt. Passiert die ausgerichtete Reihe die Lichtschranke 18, werden die Etage und das Ende des schwenkbaren Teils oder der Weiche 5 synchron mit einem definierten Ablauf nach oben bewegt. Dadurch ergibt sich eine minimale Relativbewegung, durch die Vibrationen, Beschleunigungen und Schläge vermieden werden, die für das Produkt schädlich sind oder ihre Ordnung zerstören können. Nach passieren der Lichtschranke 18 wird die ausgerichtete Produktreihe durch die eigene Bewegung auf der Etage abgelegt und durch den Anschlag auf das Etagenblechtablar 15 plaziert. Das Verhalten des Produktes in dieser Beladefunktion ist massgebend für die gewählte vorbestimmte Bandgeschwindigkeit des Weichenbandes 7. Die Lichtschranke 18 löst nach erkennen des Reihenendes die Positionierung des Weichenauslaufes auf die nächste Etage aus. Dabei wird in der Steuereinheit 31 die Zeit bis zur nächsten Reihe sowie der abgespeicherte Abstand bis zur nächsten Etage ermittelt, um damit dem Weg der Weiche neu zu berechnen. Gleichzeitig wird die Etagengeschwindigkeit in Abhängigkeit von dem Reihenabstand neu berechnet und mit definierter Beschleunigungsrampe, ausgehend von der momentanen Geschwindigkeit, neu angefahren.

Die Steuerung der Bewegung des schwenkbaren Teils 5 der Speicherzufuhr-Einrichtung 2 ist so programmiert, dass das Produkt sowohl kontinuierlich mit einem vorbestimmten Reihenabstand als auch diskontinuierlich mit sporadischer Reihenzuführung übernommen und auf den Etagen abgelegt werden kann. Dabei wird im kontinuierlichen Fall die Etage mit vorbestimmter Geschwindigkeit nach oben bewegt und im diskontinuierlichen Fall abhängig vom Reihenabstand jeweils die neue Etagengeschwindigkeit berechnet und angefahren. Durch die Berechnung wird gewährleistet, dass die Weichenbewegung innerhalb eines definierten Arbeitsbereiches abläuft. Die Position der Etage bzw. der Weichenauslaufkante wird ständig über die Inkrementalgeber 13 und 28 und die Steuereinheit 31 überwacht. Um sich aufaddierende Wegtoleranzen auszugleichen, wird der Weg nach einer bestimmten Anzahl Etagen mit der Lichtschranke 19 nachkorrigiert. Der Arbeitsbereich der Zufuhrweiche wird über die zwei Signalgeber 20 und 21 eingegrenzt und überwacht.

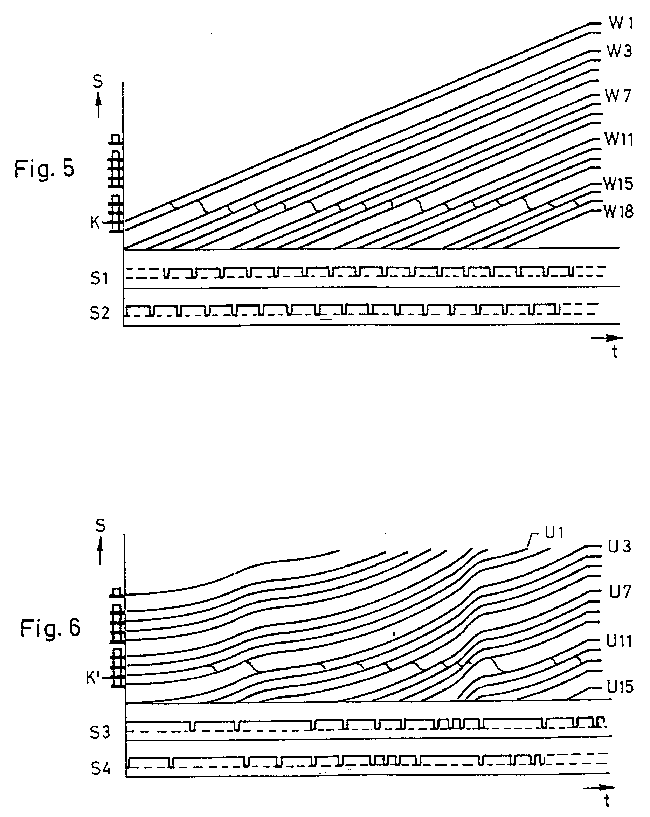

In den Figuren 5 und 6 ist jeweils in der Abzissenachse die Zeit und in der Ordinatenachse ein Weg eingetragen. Die Impulse S1 bzw. S2 sind die Ausgangssignale der Lichtschranken 18, 17 bei kontinuierlicher Zuführung und die Impulse S3 bzw. S4 die Ausgangssignale der Lichtschranken 18, 17 bei diskontinuierlicher Zuführung. Die Linien oder Kurven W1 bis W18 bzw. U1 bis U14 entsprechen dem von den Gondeln bzw. Platten oder Etagen zurückgelegten Weg und die Kurven K und K′ dem Weg von der vorderen Weichenbandkante.

Die Produktübergabe ist sowohl im Stillstand als auch in Bewegung möglich. Nach der Produktübergabe wird die Bandkante automatisch bezüglich der nächsten leeren Platte justiert und dieser nachgeführt, bis das nächste Produkt übergeben ist. Die Plattengeschwindigkeit wird in Abhängigkeit zur Produktzufuhrleistung geregelt und kann zwischen Stillstand und einer Maximalgeschwindigkeit variieren. Geschwindigkeitsänderungen können so gesteuert werden, dass die zwischen der Zwillingskette aufgehängten Gondeln nicht in Schwingungen geraten und dementsprechend keine Produktverschiebungen auf den Plattformen stattfinden. Die Kettengeschwindigkeit wird des weiteren so gesteuert, dass möglichst viele Platten gefüllt werden, damit optimalerweise im Betrieb keine ungefüllten Etagen die Weichentiante passieren. Die auslaufseitige Weichenkante wird vorzugsweise in Abhängigkeit von der Plattenteilung, dem Gondelabstand und der Kettengeschwindigkeit den Platten nachgeführt. Als Parameter für die Regelung der Gondelgeschwindigkeit können vorzugsweise die Position der Bandkante und der Produktefluss berücksichtigt werden; dies erlaubt die Weichenbewegung in einem optimalen Funktionsbereich einhalten zu können. Die Weichenbandgeschwindigkeit kann vorzugsweise in Abhängigkeit der Eigenschaften des zu verpackenden Produkts eingestellt werden.

Die Erfindung ermöglicht eine sanfte Gondelbewegung bei Zufuhrgeschwindigkeiten von mehr als 60 Reihen/min bei gleichzeitig aufrechterhaltener Ausrichtung und Ordnung der Stücke, und zwar ohne zu wenden und ohne Zerstörung der Stücke, was am Speicherauslauf für den Weitertransport vorteilhaft ist. Mit der erfindungsgemässen Einrichtung können sowohl einzelne Riegel als auch komplette ausgerichtete Reihen eingelagert werden. Um die Einrichtung in Betriebsbereitschaft zu setzen, wird die Weichenkante so lange nach unten gefahren, bis der untere Endtaster 21 überfahren wird. Die Etagen werden so lange nach oben bewegt, bis die Lichtschranke 19, die das Signal für die Referenzpunkttiorrektur liefert, überfahren wird. Danach berechnet die Steuereinheit einen möglichen gemeinsamen Totpunkt, auf den sowohl die Etagen als auch die Weichenkante in der Höhe eingerichtet werden. In dieser berechneten Position ist dann die Einrichtung synchronisiert und bereit, Produkte aufzunehmen. Danach wird ein Signal abgegeben, das die Betriebsbereitschaft für die Produktzuführung meldet.

Gemäss dem erfindungsgemässen Verfahren können die Lagerebenen 15 des Speichers 1 mindestens während zwei Ladeoperationen eine gleichbleibende Geschwindigkeit aufweisen. Zu diesem Zweck tastet die Lichtschranke 17 hintereinander angeordnete Produktereihen 32 ab und liefert entsprechende Impulse an ein Schieberegister der Steuerung 31. Bei Produktionsanlagen kommen die Produktereihen 32 mit regelmässigen gleichen Abständen und kontinuierlicher Leistung. Dann ist die Drehzahl des Antriebes 29 der Gondeln 33 auch kontinuierlich, so dass aufeinanderfolgende Lagerebenen 15 während zwei oder mehr Ladeoperationen eine gleichbleibende Geschwindigkeit aufweisen (Fig. 5).

Im Gegensatz dazu kommen die Produktereihen 32 nach den Verteilstationen teilweise mit sehr ungleichen Abständen, das heisst mit diskontinuierlicher Leistung; dann ist auch die Drehzahl des Antriebs 29 der Gondeln 33 diskontinuierlich, so dass die aufeinanderfolgenden Lagerebenen 15 ungleiche Geschwindigkeiten aufweisen (vgl. Fig. 6), wobei je nach bestand der Produkteieihen 32 die Lagerebenen 15 jeweils mit einer niedrigeren oder höheren Geschwindigkeit transportiert werden.

Zudem ist noch zu bemerken, dass bei Verstellung der mechanischen Teile, beispielsweise des Bandendes oder der Lagerebene, durch die Motoren 12 und 29 die Inkremental-Geber 13 und 28 Impulse an die Steuerung 31 abgeben.

Insbesondere gibt die Lichtschranke 19 beim Überfahren einer Etage 15 oder einer Gondel 33, das heisst einer Achse 34, einen Startimpuls an die Steuerung 31 ab, wobei die nachfolgenden Impulse des Inkrementalgebers 28 dann zur korrekten Steuerung des Motors 12 und der Weiche 5 die genaue Lage der Etage 15 oder der Gondel 33 an die Steuerung 31 melden.

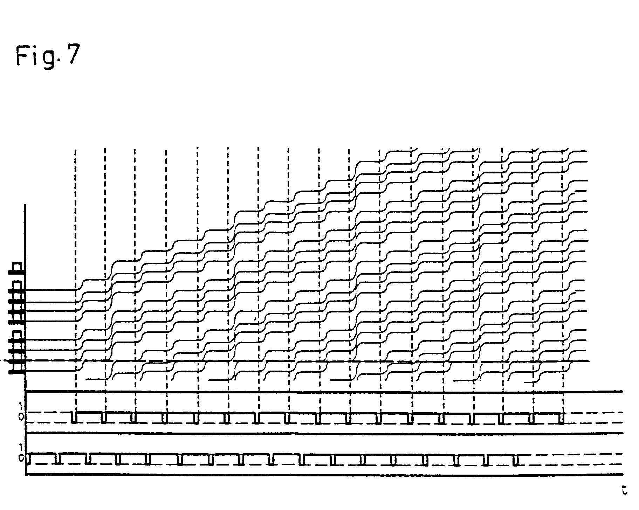

Das in Fig. 7 dargestellte Zeitdiagramm zur Erläuterung einer kontinuierlichen Zuführung nach dem Stand der Technik bezieht sich auf Gondeln bzw. Etagen, die sich abwechslungsweise im Stillstand oder in Bewegung befinden. Der Nachteil einer solchen Zuführung besteht darin, dass das Stoppen der Etagen 15 zusammen mit dem Beladen der Etagen im Stillstand und deren nachträglichen Beschleunigen unerwünschte Schwingungen erzeugt und die maximale Leistung reduziert.

Die Kurve K (Fig. 5) bzw. K′ (Fig. 6) zeigt die vertikale Lage des Bandendes 7˝. Während das Bandende 7˝ von einer bereits gefüllten Etage 15 sich vertikal nach unten zur nächsten ungefüllten Etage 15 bewegt, ist die gestrichelte Kurve K bzw. K′ sichtbar. Während sich das Bandende 7˝ synchron mit einer Etage 15 nach oben bewegt, ist die gestrichelte Linie K bzw. K′ mit den Linien U bis U₁₄ und W bis W₁₈ kongruent und unsichtbar.

Die um die Drehachsen 34 an Ketten schwenkbaren Gondeln 33 enthalten mehrere Etagen 15, beispielsweise 4 Stück, mit gleichem bestand, während der bestand nacheinanderfolgender Etagen verschiedener Gondeln 33 grösser ist. In den Figuren 1, 2 und 4 sind auch einzelne Gondeln 33′ bei den oberen Umlenkrädern 1c sowie einzelne Gondeln 33˝ bei den unteren Umlenkrädern 1d dargestellt.

Die Maschine nach der vorliegenden Erfindung wird normalerweise nicht mit nur einem Stück beschickt, weil dann die Leistung zu gering wäre, sondern vorzugsweise mit Reihen von mindestens 3 Stück. In diesem Sinne sind in Fig. 4 eigentliche Produktereihen und relativ breite Transportbänder 5, 6 dargstellt, deren Breite grösser als 3 Stückbreiten ist. Auch das dargestellte Ausrichtlineal 16 ist nur sinnvoll bei Produktereihen 32, die eine Mindestbreite aufweisen.

## Patentansprüche

1. Verfahren zum Zuführen von flachen, mindestens in Transportrichtung voneinander unregelmässig beabstandeten Produktereihen in einen Durchlauf-Speicher (1), mit einem seitlich angeordneten Zufuhrmittel (2) zur Übergabe der Produkte (32) auf Lagerebenen (15) des Speichers, wobei nach dem Durchlaufen von mindestens einer Speicherschlaufe (35) sich die Produkte (32) in zumindest angenähert gleich geordneten Reihen am Ausgang des Speichers (1) bereitgestellt befinden, wobei das Zufuhrmittel (2) nicht nur die Produkte (32) reihenweise parallel zum Eingang des Speichers (1) bewegt, sondern sie auch in Bewegungsrichtung der Lagerebene (15) transportiert, um sie gleichzeitig reihenmässig auf die jeweilige Lagerebene (15) umzuladen, während sich die Lagerebene (15) selbst bewegt, **dadurch gekennzeichnet**, dass zur Steuerung eines Antriebsmotors (29) der Lagerebenen am Eingang des Speichers (1) und eines Motors (12) eines Hebemittels (10-12) des Zufuhrmittels (2) eine Steuereinheit (31) vorhanden ist, der die Ausgangssignale von Sensorenmitteln (17, 18), die die Lage der Produktereihen (32) detektieren, und die Ausgangssignale von Positionsgebern (28, 13) am Speicher (1) und am Hebemittel (10-12) zugeführt werden.

2. Verfahren nach Anspruch 1, dadurch gekennzeichnet, dass die Produkte (32) kurz vor dem Eingang des Speichers (1) in Reihen ausgerichtet werden.

3. Verfahren nach Anspruch 1 oder 2, dadurch gekennzeichnet, dass die Lagerebenen (15) des Speichers (1) am Eingang nach oben und am Ausgang nach unten bewegt werden.

4. Verfahren nach einem der Ansprüche 1 bis 3, dadurch gekennzeichnet, dass die Lagerebenen (15) des Speichers (1) dem Zufuhrmittel (2) in seiner Bewegungskomponente nachlaufen, die mit der Bewegungsrichtung der Lagerebene übereinstimmt.

5. Verfahren nach einem der Ansprüche 1 bis 4, dadurch gekennzeichnet, dass die Lagerebenen (15) des Speichers (1) mindestens während zwei Ladeoperationen eine gleichbleibende Geschwindigkeit aufweisen.

6. Speicherzufuhr-Einrichtung zur Durchführung des Verfahrens nach einem der Ansprüche 1 bis 5, wobei ein Durchlaufspeicher (1) ein seitlich angeordnetes Zufuhrmittel (2) für mindestens in Transportrichtung voneinander unregelmässig beabstandete Reihen von flachen Produkten (32) zur Übergabe auf Lagerebenen (15) des Speichers (1) aufweist, wobei der Speicher (1) mindestens eine Speicherschlaufe (35) hat und einen Ausgang, an welchem die Produkte (32) in zumindest annähernd gleichen Reihen bereitgestellt sind, und wobei das Zufuhrmittel (2) ein Hebemittel (9-12) umfasst, mittels dessen das stromabwärtige Ende (24) eines Förderers (7) im Gleichtakt mit der Bewegung einer der Lagerebenen (15) vertikal bewegbar ist, bis die Übergabe der Produktereihe vom Förderer (7) an die betreffende Lagerebene (15) erfolgt ist, **dadurch gekennzeichnet**, dass zur Steuerung eines Antriebsmotors (29) der Lagerebenen am Eingang des Speichers (1) und eines Motors (12) des Hebemittels (10-12) des Zufuhrmittels eine Steuereinheit (31) vorhanden ist, der die Ausgangssignale von Sensorenmitteln (17, 18), die die Lage der Produktereihen (32) detektieren, und die Ausgangssignale von Positionsgebern (28, 13) am Speicher (1) und am Hebemittel (10-12) zugeführt werden.

7. Einrichtung nach Anspruch 6, dadurch gekennzeichnet, dass das Zufuhrmittel (2) schwenkbar angeordnet ist.

8. Einrichtung nach Anspruch 6 oder 7, dadurch gekennzeichnet, dass das Hebemittel (10-12) einen Motor (12) mit Spindel (11) und Hebel (10) umfasst.

9. Einrichtung nach einem der Ansprüche 6 bis 8, dadurch gekennzeichnet, dass ein nichtschwenkbarer Teil (3) vorhanden ist, bei dem sich ein Reihenausrichter (16), ein weiteres Sensormittel (30) und ein Antriebsmotor (8) befinden.

## Claims

1. Method for feeding flat product rows, irregularly spaced apart from one another at least in a transport direction, into a transit store (1), having a laterally arranged feeding means (2) for transferring the products (32) onto storage tiers (15) of the store, after traversing at least one store loop (35) the products (32) being provided at the outlet of the store (1) in at least approximately identically ordered rows, the feeding means (2) not only moving the products (32) in rows parallel to the inlet of the store (1) but also transporting them in the direction of movement of the storage tier (15), in order to reload them simultaneously by row onto the respective storage tier (15) while the storage tier (15) is itself moving, characterized in that there is present for the purpose of controlling a drive motor (29) of the storage tiers at the inlet of the store (1) and of a motor (12) of a lifting means (10-12) of the feeding means (2) a control unit (31) which is fed the output signals of sensor means (17, 18), which detect the position of the product rows (32), and the output signals of position sensors (28, 13) on the store (1) and on the lifting means (10-12).

2. Method according to Claim 1, characterized in that the products (32) are aligned in rows shortly before the inlet of the store (1).

3. Method according to Claim 1 or 2, characterized in that the storage tiers (15) of the store (1) move upwards at the inlet and downwards at the outlet.

4. Method according to one of Claims 1 to 3, characterized in that the storage tiers (15) of the store (1) follow that movement component of the feeding means (2) which corresponds to the movement direction of the storage tier.

5. Method according to one of Claims 1 to 4, characterized in that the storage tiers (15) of the store (1) have a constant speed at least during two loading operations.

6. Store feeding device for carrying out the method according to one of Claims 1 to 5, a transit store (1) having a laterally arranged feeding means (2) for rows, irregularly spaced apart from one another at least in a transport direction, of flat products (32) for transferring said products onto storage tiers (15) of the store (1), the store (1) having at least one store loop (35) and one outlet, at which the products (32) are provided in at least approximately identical rows, and the feeding means (2) comprising a lifting means (9-12) by means of which the downstream end (24) of a conveyor (7) can be moved vertically and synchronously with the movement of one of the storage tiers (15) until the product row is transferred from the conveyor (7) onto the relevant storage tier (15), characterized in that there is present for the purpose of controlling a drive motor (29) of the storage tiers at the inlet of the store (1) and of a motor (12) of the lifting means (10-12) of the feeding means a control unit (31) which is fed the output signals of sensor means (17, 18), which detect the position of the product rows (32), and the output signals of position sensors (28, 13) on the store (1) and on the lifting means (10-12).

7. Device according to Claim 6, characterized in that the feeding means (2) is arranged pivotably.

8. Device according to Claim 6 or 7, characterized in that the lifting means (10-12) comprises a motor (12) with a spindle (11) and lever (10).

9. Device according to one of Claims 6 to 8, characterized in that a non-pivotable part (3) is present, in which there are located a row aligner (16), a further sensor means (30) and a drive motor (8).

## Revendications

1. Procédé d'alimentation de rangées de produits plats, espacées irrégulièrement les unes des autres au moins dans la direction de transport, dans un système de stockage-tampon en continu (1), comportant un moyen d'alimentation (2) disposé latéralement pour le transfert des produits (32) sur des plans de stockage (15) du système de stockage-tampon, dans lequel, après le passage continu d'au moins une boucle (35) du système de stockage-tampon, les produits (32) se trouvent arrangés à la sortie du système de stockage-tampon (1) au moins approximativement en rangées égales ordonnées, dans lequel le moyen d'alimentation (2) non seulement déplace les produits (32) en rangées parallèlement à l'entrée du système de stockage-tampon (1), mais les transporte également dans le sens de déplacement du plan de stockage (15), afin de les charger simultanément en rangées sur le plan de stockage respectif (15), tandis que le plan de stockage (15) se déplace lui-même, caractérisé en ce que pour commander un moteur d'entraînement (29) des plans de stockage à l'entrée du système de stockage-tampon (1) et un moteur (12) d'un moyen de levage (10-12) du moyen d'alimentation (2), on prévoit une unité de commande (31), vers laquelle sont acheminés les signaux de sortie de moyens de détecteurs (17, 18) qui détectent la position des rangées de produits (32), et les signaux de sortie de capteurs de déplacement (28, 13) sur le système de stockage-tampon (1) et sur le moyen de levage (10-12).

2. Procédé selon la revendication 1, caractérisé en ce que les produits (32) sont orientés en rangées peu de temps avant l'entrée du système de stockage-tampon (1).

3. Procédé selon la revendication 1 ou 2, caractérisé en ce que les plans de stockage (15) du système de stockage-tampon (1) sont déplacés vers le haut à l'entrée, et vers le bas à la sortie.

4. Procédé selon l'une quelconque des revendications 1 à 3, caractérisé en ce que les plans de stockage (15) du système de stockage-tampon (1) suivent le moyen d'alimentation (2) dans sa composante de déplacement, qui correspond à la direction de déplacement du plan de stockage.

5. Procédé selon l'une quelconque des revendications 1 à 4, caractérisé en ce que les plans de stockage (15) du système de stockage-tampon (1) présentent une vitesse uniforme au moins pendant deux opérations de chargement.

6. Dispositif d'alimentation pour système de stockage-tampon pour réaliser le procédé selon l'une quelconque des revendications 1 à 5, dans lequel un système de stockage-tampon en continu (1) présente un moyen d'alimentation (2) disposé latéralement pour des rangées de produits plats (32) espacées irrégulièrement les unes des autres au moins dans la direction de transport, destiné à leur transfert sur des plans de stockage (15) du système de stockage-tampon (1), dans lequel le système de stockage-tampon (1) a au moins une boucle (35) du système de stockage-tampon et une sortie, au niveau de laquelle les produits (32) sont arrangés en rangées au moins approximativement égales, et dans lequel le moyen d'alimentation (2) comporte un moyen de levage (9-12) au moyen duquel l'extrémité aval (24) d'un convoyeur (7) peut être déplacée verticalement de manière synchronisée avec le déplacement de l'un des plans de stockage (15), jusqu'à ce que le transfert de la rangée de produits depuis le convoyeur (7) jusqu'au plan de stockage correspondant (15) ait été effectué, caractérisé en ce qu'il est prévu, pour la commande d'un moteur d'entraînement (29) des plans de stockage à l'entrée du système de stockage-tampon (1) et d'un moteur (12) du moyen de levage (10-12) du moyen d'alimentation, une unité de commande (31), vers laquelle sont acheminés les signaux de sortie de moyens de détecteurs (17, 18) qui détectent la position des rangées de produits (32), et les signaux de sortie de capteurs de déplacement (28, 13) sur le système de stockage-tampon (1) et sur le moyen de levage (10-12).

7. Dispositif selon la revendication 6, caractérisé en ce que le moyen d'alimentation (2) est disposé de manière à pouvoir pivoter.

8. Dispositif selon la revendication 6 ou 7, caractérisé en ce que le moyen de levage (10-12) comprend un moteur (12) avec une broche (11) et un levier (10).

9. Dispositif selon l'une quelconque des revendications 6 à 8, caractérisé en ce qu'il est prévu une partie non pivotante (3) sur laquelle se trouvent un dispositif d'alignement en rangées (16), un autre moyen de détecteur (30) et un moteur d'entraînement (8).
